# EUROPEAN PATENT APPLICATION

(11) **EP 3 843 252 A1**
(43) Date of publication of application: **30.06.2021**
(21) Application number: 20216497.6
(22) Date of filing: 22.12.2020
(51) Int. Cl.: H02M 1/15, H02M 1/32, H02M 5/458, H02M 7/5387

(54) **METHOD FOR OPERATING AN ELECTRONIC CONTROLLER**

(30) Priority: 24.12.2019 CN 201911343561
(71) Applicant: Carel Industries S.p.A., 35020 Brugine (PD) (IT)
(72) Inventor: ZORDAN, Marco, 35020 Brugine PD (IT); Liu, Steven, Suzhou, Jiangsu Province 215151 (CN)
(74) Representative: De Giorgi, Michele

(57) **Abstract**

Described is a method for operating an electronic controller, wherein the electronic controller can be connected to a load (100) for powering it and comprises a DC bus and an inverter stage (13) connected to the DC bus for being powered at a bus voltage Vdc. The electronic controller further comprises a control device (14) connected to the inverter stage (13) for controlling the latter and generating a power supply current lout for powering the load (100) in an adjustable manner.

The method comprises:
a step A - for measuring a value of the bus voltage Vdc of the DC bus;
a step B - for isolating an oscillatory component Vdc-o of the bus voltage Vdc and comparing it with a threshold value Vth;
a step C - where if the oscillatory component Vdc-o is greater than the threshold value Vth the inverter stage (13) is controlled in such a way as to add to the power supply current lout a compensation current ladd.

The compensation current ladd is modulated in such a way as to generate to the DC bus a compensation voltage Vadd such that the combination of the oscillatory component Vdc-o of the bus voltage Vdc-o with the compensation voltage Vadd has a value less than or equal to the initial oscillatory component Vdc-o.

## Description

This invention relates to a method for operating an electronic controller, especially designed for controlling a compressor of a refrigerating machine.

In particular, the invention relates to a method for operating an electronic controller equipped with a rectifier stage or a voltage converter, for example a PFC unit, and an inverter connected to a DC bus for DC power supply.

The method according to the invention guarantees a better control of the voltage supplied and/or guarantees a greater duration of the capacitors of the DC bus, in particular preventing damage resulting from ripple of excessive voltages.

The expression "ripple" or "voltage ripple" used herein means the voltage oscillation which superposes on a constant voltage value to determine cumulatively a voltage, for example at the DC bus, and which derives from the obtainment of a direct current voltage (DC) from an alternating current voltage, in a power supply system (for example single or three-phase). Currently, in general, power supply controllers are known for user devices which comprise a rectifying stage, or active conversion of the voltage, downstream of which there is a DC link stage and a DC bus stage capacitor which has a capacitor unit.

The DC link can have an inductance which is known is the technical jargon as DC-choke and/or a conversion stage designed for the power factor correction (PFC) at the input.

Downstream of the DC stage there is a controlled inverter stage for determining the operational control of the user device, such as, for example, for controlling the operating speed of a compressor and especially a volumetric compressor, for example of the spiral or scroll type, with pistons, rotary, twin rotary, twin stage, screw type or the like, for application in refrigerating machines.

It is currently known that these types of controllers can cause increases in voltage ripple, and corresponding currents, at high and different amplitudes and which can adversely affect the duration of the capacitor as well as having a negative impact on the voltage control performed by the inverter.

These effects are also caused and/or reinforced by the inductive-capacitive interaction between the capacitor of the DC bus and the DC-choke inductance or the inductive effect of the coils of the PFC unit.

Once these voltage ripple increases are triggered they tend to self-maintain as a result of the current oscillations which occur due to the non-ideal behaviour of the electronic components of the controller, such as, for example, due to the saturation of the inductance and parasite currents at the capacitor.

This effect, even though it does not cause blockages, can generate reductions and periodic oscillations of the voltage of the DC bus, as well as reaching values which can also exceed the declared ratings of the components.

The problem forming the basis of the invention is to overcome the drawbacks of the above-mentioned traditional controllers.

The purpose of the invention is to therefore resolve this problem by providing a method for operating an electronic controller which allows a control of the voltage controlled by the inverter to be obtained which is reliable and precise, longer lasting, as well as guaranteeing a longer life of the electronic components of the controller and especially of the capacitor unit of the DC bus.

In the context of this purpose, an aim of the invention is to provide a method for operating an electronic controller which allows the increase of the amplitude of the voltage ripple to be counteracted.

Another aim of the invention is to provide a method for operating an electronic controller which allows any increase of the voltage ripple to be compensated by controlling the inverter.

Yet another aim of the invention is to provide a method for operating an electronic controller which allows currents to be generated which have a phase difference with respect to those correlated with a voltage ripple.

This aim, as well as these and other aims which will emerge more fully below, are attained by a method for operating an electronic controller according to appended claim 1.

Detailed features of a method for operating an electronic controller according to the invention are indicated in the dependent claims.

Further features and advantages of the invention will emerge more fully from the description of a preferred but not exclusive embodiment of a method for operating an electronic controller, illustrated by way of non-limiting example in the accompanying drawings, in which:

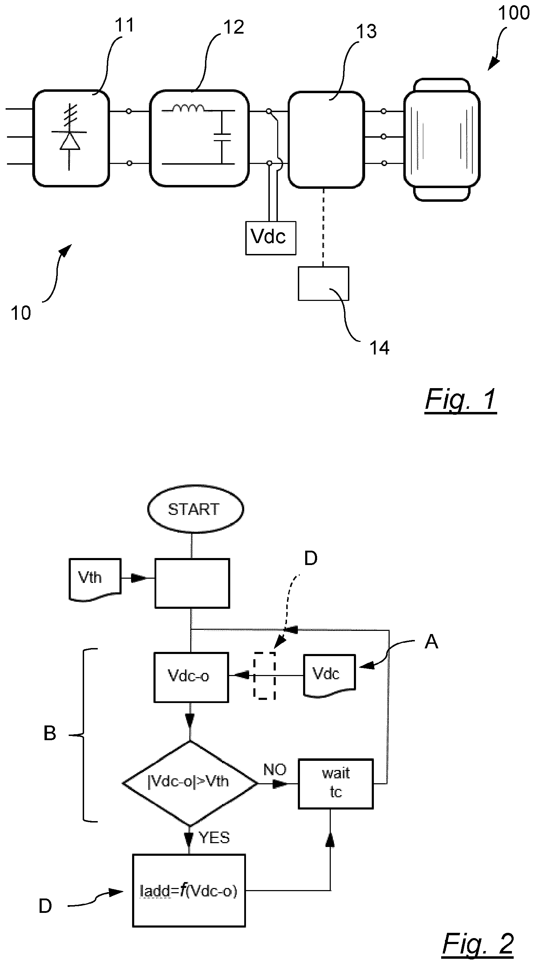

- Figure 1 is a simplified diagram of an electronic controller;
- figure 2 is a simplified flow diagram representing a method for operating an electronic controller according to the invention.

With particular reference to the above-mentioned drawings, the numeral 10 denotes in its entirety an electronic controller which can be connected to a load 100 for powering it and comprising:
- a rectification stage 11;
- a DC bus 12;
- an inverter stage 13, connected to the rectification stage 11 by means of the DC bus 12 which is configured for supplying to the inverter stage 13 a bus voltage Vdc;
- a control device 14, connected to the inverter stage 13 for controlling the latter so as to generate a power supply current lout for powering the load 100 in an adjustable manner.

Specifically, the load 100 can be a compressor of a refrigerating machine, in which case the control device 14 will be configured for controlling the inverter stage 13 in such a way as to operate the compressor according to a variable rotation regime.

The operating method according to the invention can therefore be especially designed for the operation of an electronic controller designed to operate a compressor of a refrigerating machine, for example of the spiral or scroll type, with a variable speed.

Operatively, the method for operating an electronic controller, according to the invention, comprises:
a step A - for measuring a value of the bus voltage Vdc of the DC bus 12;
a step B - for isolating an oscillatory component Vdc-o of the bus voltage Vdc and comparing it with a threshold value Vth;
a step C - which if the bus voltage value Vdc is greater than the threshold value Vth, controls the inverter stage 13 to add to the power supply current lout a compensation current ladd, where the compensation current ladd is modulated in such a way as to generate at the DC bus 12 a compensation voltage Vadd such that the combination of the oscillatory component Vdc-o of the bus voltage Vdc-o with the compensation voltage Vadd has a value less than the initial oscillatory component Vdc-o and, preferably, less than the threshold value Vth. Preferably, the comparison of step B is performed between the absolute value of an amplitude, or semi-amplitude, of the oscillatory component Vdc-o and the threshold value Vth.

The steps A, B and C can be repeated cyclically, continuously or at intervals of time Tc, which can be regular.

The step A can comprise measuring an oscillating ripple component of the bus voltage Vdc.

The step C, correspondingly, can comprise generating the compensation current ladd in such a way that the compensation voltage Vadd has a trend designed to generate a destructive interference with respect to the ripple component.

In particular, the step C can generate the compensation current ladd in such a way that the compensation voltage Vadd will be such that its combination with the oscillatory component Vdc-o of the bus voltage Vdc consists in a compensated voltage Vcomp=Vdc-o+Vadd which is less than or equal to the oscillatory component Vdc-o of the bus voltage Vdc, before the combination, and preferably less than the threshold voltage Vth.

Moreover, the threshold vague Vth can be set in such a way as to tend to annul the ripple component of the bus voltage Vdc.

For this purpose, the step C can comprise generating the compensation current ladd in such a way that the compensation voltage Vadd interferes in a destructive manner with the ripple component, annulling it.

The step A can be performed, for example by the control device 14, by measuring a signal representing the value of said bus voltage Vdc which consists in a fraction of the latter.

In the method according to the invention, the step A can be repeated cyclically with a predetermined regularity, for example with a frequency selected between 125 ps and 250 ps.

The step A can be performed by means of a digital-analogue converter which can be connected to the control device 14.

The method according to the invention can comprise a step D, prior to the step C, which comprises a validation of the value of the bus voltage Vdc.

The method according to the invention can comprise the performance of the step C only if said validation has a positive result.

The method according to the invention can comprise the performance of the step B only if said validation has a positive result.

The validation may consist in verifying whether the value of the bus voltage Vdc is within a predetermined range [Vdc-min, Vdc-max].

The operation of isolating an oscillatory component Vdc-o of the bus voltage Vdc of the step A can comprise, for example, the use of a low-pass filter to obtain a constant component Vdc-c of the bus voltage Vdc and subtract it from the latter or it can comprise the use of a high-pass filter.

The compensation current ladd can therefore be modulated as a function of the oscillatory component Vdc-o in such a way as to generate a destructive effect on the latter.

In order not to interfere with the operation of the load 100, the method can be such that the intensity of the compensation current ladd is limited to a value not greater than 50% and preferably not greater than 30% of the intensity of the power supply current lout of the load 100.

The threshold value Vth can be selected according to the contingent implementation requirements of the invention and can also have a zero value (Vth = 0), that is to say, the compensation effect by application of the compensation voltage Vadd will always be active where there is a voltage ripple which is not zero.

In particular, it derives from considerations on the design of the series of capacitors and is also based on the expected life of the electronic controller.

In particular, the longer the expected life of the inverter stage 13 is to be, for the same level of degradation of the series of capacitors of the DC bus, the lower the stresses must be deriving from the ripple of the bus voltage Vdc and, therefore, the lower the threshold value Vth must be.

The threshold value Vth could also be selected according to the power level generated by the inverter stage 13, for example it can be selected in a proportional manner, within the maximum tolerated limit, for that power, in such a way as to compensate for abnormal absorptions for the stresses at the series of capacitors.

By implementing a method according to the invention, if the oscillatory component of the bus voltage Vdc, that is, its amplitude or semi-amplitude, in absolute terms, is greater than that tolerated, that is, greater then the threshold value Vth, then an additional current is generated which, discharging the capacitors of the series of capacitors of the DC bus 12, reduces the oscillatory component Vdc-o of the bus voltage Vdc.

The additional current can be obtained, in accordance with the invention, forcing a compensation current ladd in addition to the power supply current lout at the output from the inverter stage 13.

This compensation current ladd, set in such a way as to generate additional power at the output of the in inverter stage 13, implies an electrical power at the DC bus 12 which consequently requires a current from the series of capacitors of the DC bus 12. By implementing the method according to the invention, this requested power will have a trend which reflects, in terms of destructive interference, that of the ripple oscillations; the additional current is therefore derived from the same series of capacitors, obtaining the desired effect of discharging them, that is, the reduction of their load, that is to say, of the bus voltage Vdc.

In other words, in the method according to the invention, use is made of the link between the compensation current ladd set at the output from the inverter stage 13 and the consequent additional current at the series of capacitors, at bus voltage Vdc, by means of the active electrical power.

The compensation current ladd at the output from the inverter stage 12 can be controlled by the current adjustment loops of the inverter stage 12. In particular, where the load 100 is a compressor, the current component linked to the active power will be that directly linked to the drive torque production of the compressor.

The compensation current ladd set towards the load 100 is selected at a value such that its effect towards the load 100 (for example, as disturbance torque, if the load 100 is a compressor) is negligible with respect to the current which there would otherwise be.

As mentioned above, the compensation current ladd can be selected as proportional to the difference between the measured value of the oscillatory component Vdc-o of the bus voltage Vdc and the threshold value Vth.

Where the load 100 is a compressor, the compensation current ladd will be added to that required for generating the torque necessary for rotating the compressor and the resulting sum becomes the reference for the adjustment loop of the inverter stage 13. In other words, the intensity of the compensation current ladd can be selected in such a way that it does not determine a variation of the torque generated just by the power supply current lout, which is greater than 50% of the torque itself and preferably not greater than 30% of the latter.

In particular, the compensation current ladd can be proportional to the amplitude, or semi-amplitude, of the oscillatory component Vdc-o of the bus voltage Vdc if the absolute value of the oscillatory component Vdc-o is greater than the threshold value Vth, for example according to the formula ladd = K (Vdc - Vdc-c)= K Vdc-o where K is a constant.

In that case, as soon a the absolute value of the oscillatory component Vdc-o exceeds the threshold value Vth, the compensation current ladd will be injected with a value proportional to the oscillatory component Vdc-o.

This allows a reaction of the system which is immediately intense and effective. Alternatively, in order to have a gradual compensation effect, the compensation current ladd can be proportional to the difference between the oscillatory component Vdc-o and the threshold value Vth with the sign of the oscillatory component Vdc-o, that is, in the formula ladd = K (Vdc-o - (Vth x sgn(Vdc-o))) where sgn(Vdc-o)=-1 if VDC-o<0, sgn(Vdc-o)=+1 if VDC-o>0 or sgn(Vdc-o)=0 if VDC-o=0.

It has therefore been shown how the invention achieves the set aims and objectives. In particular, i provides a method for operating an electronic controller which allows a control of the voltage controlled by the inverter to be obtained which is reliable and precise, longer lasting, as well as guaranteeing a longer life of the electronic components of the controller and especially of the series of capacitors of the DC bus. Moreover, this provides a method for operating an electronic controller which allows the increase of the amplitude of the voltage ripple to be counteracted and to compensate for any increase of voltage ripple by controlling the inverter.

A method for operating an electronic controller, according to the invention, allows currents to be generated which have a phase difference with respect to those correlated with a voltage ripple.

The invention as it is conceived is susceptible to numerous modifications and variants, all falling within the scope of protection of the appended claims.

Further, all the details can be replaced by other technically-equivalent elements.

In practice, the forms and dimensions can be varied according to the contingent requirements and the state of the art.

Where the constructional characteristics and the technical characteristics mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

## Claims

1. A method for operating an electronic controller, wherein said electronic controller can be connected to a load (100) for powering it and comprises a DC bus and an inverter stage (13) connected to said DC bus (12) for being powered at a bus voltage Vdc, said electronic controller further comprising a control device (14) connected to said inverter stage (13) for controlling the latter and generating a power supply current lout for powering said load (100) in an adjustable manner; said method comprising:
• a step A - for measuring a value of said bus voltage Vdc of said DC bus (12);
• a step B - for isolating an oscillatory component Vdc-o of said bus voltage Vdc and comparing said oscillatory component Vdc-o with a threshold value Vth;
• a step C - which if said oscillatory component Vdc-o is greater than said threshold value Vth, controls said inverter stage (13) for adding to said power supply current lout a compensation current ladd;
wherein said compensation current ladd is modulated in such a way as to generate to said DC bus (12) a compensation voltage Vadd such that the combination of said oscillatory component Vdc-o with said compensation voltage Vadd has a value less than or equal to said initial oscillatory component Vdc-o.

2. The operating method according to claim 1, wherein said compensation current ladd is modulated in such a way as to generate to said DC bus (12) a compensation voltage Vadd such that the combination of the oscillatory component Vdc-o of said bus voltage Vdc with said compensation voltage Vadd has a value less than or equal to said threshold value Vth.

3. The operating method according to any one of the previous claims, wherein said steps A, B and C are repeated cyclically at regular intervals of time Tc.

4. The operating method according to any one of the previous claims, wherein said step A comprises measuring an oscillating ripple component of said bus voltage Vdc, said step C comprising generating said compensation current ladd in such a way that said compensation voltage Vadd has a trend designed to generate a destructive interference with respect to said ripple component.

5. The operating method according to claim 4, wherein said threshold value Vth is set in such a way that said compensation voltage Vadd interferes in a destructive manner with said ripple component, preferably it is set Vth=0 in such a way as to annul said ripple component.

6. The operating method according to any one of the previous claims, wherein said step A is performed by measuring a signal representing the value of said bus voltage Vdc which consists in a fraction of the latter.

7. The operating method according to any one of the previous claims, wherein said step A is repeated cyclically at predetermined time intervals.

8. The operating method according to any one of the previous claims, comprising a step D, prior to said step C, which comprises a validation of the value of said bus voltage Vdc; said step C only being performed if said validation has a positive outcome.

9. The operating method according to any one of the previous claims, wherein said compensation current ladd is proportional, selected between:
- an amplitude, or semi-amplitude, of the oscillatory component Vdc-o of said bus voltage Vdc, ladd = K (Vdc-o);
- the difference between said oscillatory component Vdc-o and said threshold value Vth to which is associated the sign of said oscillatory component Vdc-o, ladd = K (Vdc-o - (Vth x sgn(Vdc-o))).

10. The operating method according to any one of the previous claims, which comprises where the intensity of said compensation current ladd is limited to a value not greater than 50% and preferably not greater than 30% of the intensity of said power supply current lout.
